# EUROPÄISCHE PATENTSCHRIFT

(11) **EP 1 772 345 B1**
(45) Veröffentlichungstag und Bekanntmachung des Hinweises auf die Patenterteilung: **03.03.2010**
(21) Anmeldenummer: 06016729.3
(22) Anmeldetag: 10.08.2006
(51) Int. Cl.: B62D 1/04

(54) **Multifunktions-Bedienvorrichtung zur Bedienung eines Fahrzeugs**
Multi-functional operation device for operating a vehicle
Dispositif de commande multi-fonctionnel pour commander un véhicule

(30) Priorität: 10.10.2005 DE 202005015848 U
(43) Veröffentlichungstag der Anmeldung: 11.04.2007
(73) Patentinhaber: MEYRA WILHELM MEYER GMBH & CO. KG, D-32689 Kalletal-Kalldorf (DE)
(72) Erfinder: Wahlen, Hans-Joachim, 32549 Bad Oeynhausen (DE)
(74) Vertreter: Weber, Joachim

(56) Entgegenhaltungen:
- DE-A1- 10 138 118
- DE-A1- 19 625 966
- GB-A- 2 023 938

## Beschreibung

Die vorliegende Erfindung betrifft eine Multifunktions-Bedienvorrichtung zur Bedienung eines Fahrzeugs für behinderte Menschen.

Um behinderten Menschen zu ermöglichen, dass diese ein Fahrzeug, wie z.B. ein Kraftfahrzeug, einen Rollstuhl oder ein Elektromobil betätigen können, sind individuell ausgeführte Bedienvorrichtungen vorzusehen. Je nach Art der Behinderung und Größe des Benutzers sind dabei unterschiedlichste Bedienvorrichtungen vorzusehen, insbesondere, wenn die Bedienvorrichtung multifunktional sein soll. Aufgrund der relativ geringen Stückzahlen sind die am Markt bekannten Bedienvorrichtungen standardisiert, so dass eine individuelle Anpassung der Bedienvorrichtung an einen Benutzer nicht möglich ist.

Die DE 101 38 118 A1 offenbart ein Bedienelementesystem für ein Fahrzeug, bei welchem ein Lenkrad-Kranz mehrteilig ausgebildet ist und aus einzelnen Komponenten zusammengesetzt werden kann. Dabei ist vorgesehen, dass einzelne Bedienelemente an dem Lenkrad-Kranz in unterschiedlicher Ausgestaltung kombiniert werden können, um einem Benutzer des Kraftfahrzeugs bei üblicher Benutzung des Lenkrades zusätzlich Tastenfunktionen zur Verfügung zu stellen.

Es ist daher Aufgabe der vorliegenden Erfindung, eine Multifunktions-Bedienvorrichtung zur Bedienung eines Fahrzeugs bereitzustellen, welche bei einfachem und kostengünstigem Aufbau eine individuelle Anpassung an einen Benutzer ermöglicht.

Diese Aufgabe wird durch eine Multifunktions-Bedienvorrichtung mit den Merkmalen des Anspruchs 1 gelöst. Die Unteransprüche zeigen bevorzugte Weiterbildungen der Erfindung.

Die erfindungsgemäße Multifunktions-Bedienvorrichtung weist den Vorteil auf, dass sie individuell an unterschiedliche Benutzer angepasst werden kann. Erfindungsgemäß ist hierzu ein austauschbarer Distanzring vorgesehen, welcher zwischen einem ersten Teilelement und einem zweiten Teilelement der Multifunktions-Bedienvorrichtung angeordnet ist. Durch Wahl eines Distanzrings mit unterschiedlicher Dicke ist eine Anpassung an individuelle Benutzer möglich. Die verschiedenen Distanzringe ermöglichen somit eine Bedienvorrichtung, welche kostengünstig, insbesondere an unterschiedliche Handgrößen der Benutzer, anpassbar ist. Diese Maßnahme erleichtert für die Benutzer die Bedienung eines Fahrzeugs erheblich, was auch der Fahrsicherheit für den Benutzer zuträglich ist. Am ersten Teilelement ist ferner wenigstens eine Taste zum Bedienen einer Funktion des Fahrzeugs vorgesehen. Erfindungsgemäß wird somit eine modular aufgebaute Bedienvorrichtung vorgeschlagen, welche standardisierte erste und zweite Teilelemente aufweist, die mit Distanzringen verschiedener Dicken beliebig kombinierbar sind. Dadurch wird eine einfache und kostengünstige Lösung zur Anpassung an unterschiedliche Handgrößen möglich.

Vorzugsweise ist ein zweites Teilelement der Multifunktions-Bedienvorrichtung zur Auflage einer Handfläche des Benutzers ergonomisch an die Handfläche angepasst. Das zweite Teilelement weist dabei vorzugsweise eine ei-ähnliche Form auf, so dass es gut als Auflagefläche für eine Handfläche geeignet ist.

Besonders bevorzugt sind am ersten Teilelement mindestens fünf Tasten angeordnet, wobei um eine zentrale Taste vier weitere Tasten jeweils um 90° versetzt zur zentralen Taste angeordnet sind. Die Vielzahl von Tasten hat dabei jeweils eine andere Funktion, wie beispielsweise Betätigung von linkem und rechtem Blinker, Scheibenwischer, Licht, Fernlicht, Hupe, Fensterheber usw. Die fünf Tasten weisen somit eine Anordnung auf, welche der Augenzahl fünf auf einem Würfel entspricht. Dadurch wird eine Einfinger-Betätigung ermöglicht, wobei die Handfläche des Benutzers auf dem zweiten Teilelement aufliegt und er die Tasten beispielsweise mit dem Daumen oder Zeigefinger betätigen kann. Es sei angemerkt, dass am ersten Teilelement ferner auch noch seitlich und/oder an der Stirnseite weitere Bedientasten vorgesehen werden können.

Besonders bevorzugt umfasst die Multifunktions-Bedienvorrichtung eine Signalübertragungseinrichtung zur Übertragung eines durch eine Betätigung einer Taste erzeugten Befehls zu einer Steuerung des Fahrzeugs. Die Signalübertragungseinrichtung ist vorzugsweise kabellos und ist im Inneren der Bedienvorrichtung integriert. Die Signalübertragungseinrichtung erfolgt vorzugsweise mittels Infrarot- oder Funksignalen.

Um insbesondere die Multifunktions-Bedienvorrichtung in einem Kraftfahrzeug auch als Lenkhilfe zu nutzen, sind gemäß einer bevorzugten Ausgestaltung der Erfindung eine Halterung und ein Drehgelenk vorgesehen. Die durch den Distanzring verbundenen ersten und zweiten Teilelemente sind dabei am Drehgelenk drehbar gelagert. Die Halterung ist zur lösbaren Befestigung an einem Lenkrad des Kraftfahrzeugs ausgelegt. Diese Anordnung macht es möglich, dass eine Einhandbedienung eines Fahrzeugs möglich ist, wobei einhändig auch Kurven und insbesondere auch Kreisverkehre o.ä. gefahren werden können und z.B. gleichzeitig ein Blinker oder Wischer betätigt werden kann. Somit kann die erfindungsgemäße Multifunktions-Bedienvorrichtung ein sicheres Fahren unterstützen. Das Drehgelenk ermöglicht es dabei, dass die Ausrichtung der Multifunktions-Bedienvorrichtung am Lenkrad immer in einer für den Benutzer optimalen Position möglich ist.

Die Halterung für die Multifunktions-Bedienvorrichtung ist vorzugsweise als bogenförmige Halbschale ausgebildet, welche auf ein Lenkrad aufklipsbar ist. Dadurch kann die Multifunktions-Bedienvorrichtung einfach auf ein Lenkrad aufgeklipst werden und wieder vom Lenkrad entfernt werden, wenn beispielsweise eine Person das Fahrzeug fahren soll, welche die Multifunktions-Bedienvorrichtung nicht benötigt.

Gemäß einer weiteren bevorzugten Ausgestaltung der Erfindung umfasst die Multifunktions-Bedienvorrichtung eine Steckachse an einem unteren Bereich, mit welcher die Multifunktions-Bedienvorrichtung beispielsweise an einem entsprechend ausgelegten Brems-Gas-Bediengerät eines Kraftfahrzeugs aufgesteckt werden kann. Die Steckachse ermöglicht dabei ein Abnehmen der Multifunktions-Bedienvorrichtung, so dass diese z.B. auch in Verbindung mit einem Elektrorollstuhl oder einem Elektromobil verwendet werden können.

Um besonders kostengünstig herstellbar zu sein, ist das zweite Teilelement vorzugsweise aus zwei Halbschalen zusammengesetzt, welche insbesondere aus einem Kunststoff, wie z.B. Polyurethan, hergestellt sind.

Die individuell anpassbare Multifunktions-Bedienvorrichtung ermöglicht es somit, dass ein Nutzer diese in Verbindung mit unterschiedlichen Fahrzeugen, wie z.B. einem Kraftfahrzeug, einem Elektrorollstuhl und einem Elektromobil verwendet.

Nachfolgend werden bevorzugten Ausführungsbeispiele der Erfindung unter Bezugnahme auf die Zeichnung beschrieben. In der Zeichnung ist:
- Fig. 1: eine Seitenansicht einer Multifunktions-Bedienvorrichtung gemäß einem ersten Ausführungsbeispiel der Erfindung,
- Fig. 2: eine Schnittansicht der in Fig. 1 gezeigten Multifunktions-Bedienvorrichtung,
- Fig. 3: eine perspektivische Ansicht der in den Fig. 1 und 2 gezeigten Multifunktions-Bedienvorrichtung,
- Fig. 4: eine Draufsicht eines ersten Teilelements der in den Fig. 1 bis 3 gezeigten Multifunktions-Bedienvorrichtung, und
- Fig. 5: eine Draufsicht einer Multifunktions-Bedienvorrichtung gemäß einem zweiten Ausführungsbeispiel der Erfindung, welche an einem Lenkrad befestigt ist.

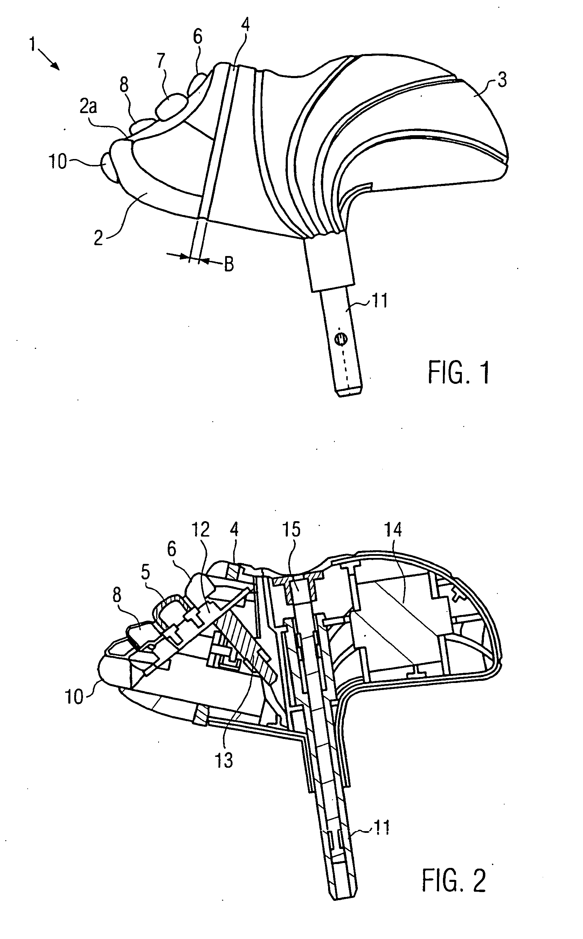

Nachfolgend wird unter Bezugnahme auf die Fig. 1 bis 4 eine Multifunktions-Bedienvorrichtung 1 gemäß einem ersten Ausführungsbeispiel der Erfindung beschrieben.

Wie insbesondere aus den Fig. 1 bis 3 ersichtlich ist, umfasst die Multifunktions-Bedienvorrichtung 1 ein erstes Teilelement 2, ein zweites Teilelement 3 und einen dazwischen angeordneten Distanzring 4. Der Distanzring 4 weist eine vorbestimmte Breite B auf und ist als zylindrischer Ring ausgebildet. Zwischen dem ersten Teilelement 2 und dem zweiten Teilelement 3 können verschiedene Distanzringe mit unterschiedlichen Breiten eingesetzt werden. Dadurch wird eine individuelle Anpassung der Multifunktions-Bedienvorrichtung 1 an Hände unterschiedlicher Benutzer möglich.

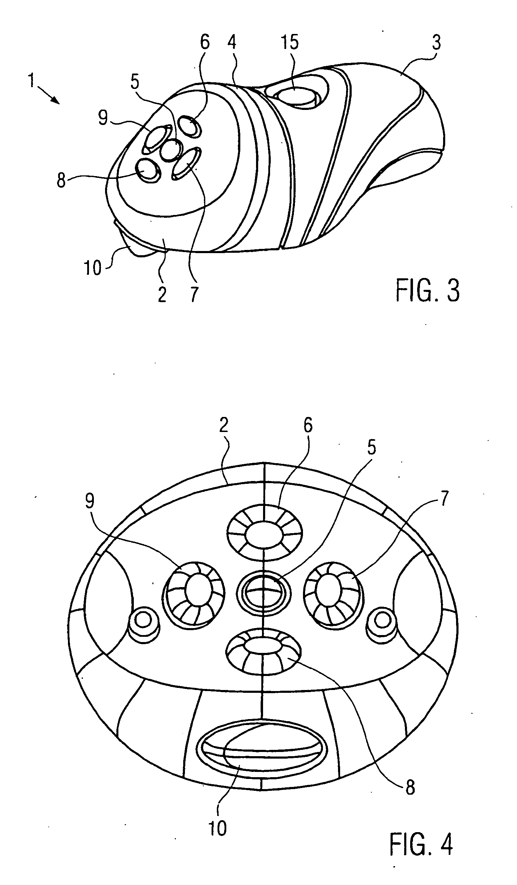

Das zweite Teilelement 3 ist ergonomisch ausgebildet und weist insbesondere eine handschmeichelnde Form auf, so dass es gut als Auflagefläche für eine Handfläche geeignet ist. Am ersten Teilelement 2 ist eine Vielzahl von Tasten 5, 6, 7, 8, 9, 10 ausgebildet. Wie insbesondere im Schnitt von Fig. 2 ersichtlich ist, sind die Tasten 5, 6, 7, 8, 9, 10 mit einer Platine 12 verbunden. Über die Tasten können Funktionen des Fahrzeugs, z.B. Blinker, Wischer, Hupe, Licht, Fernlicht, usw., bedient werden. Um eine Bedienung mittels eines Fingers zu ermöglichen, sind die Tasten in einer konkaven Fläche 2a des ersten Teilelements 2 in Form einer Augenzahl fünf eines Würfels angeordnet. Eine mittlere Taste 5 ist dabei von vier äußeren Tasten 6, 7, 8, 9 umgeben, wobei die äußeren Tasten 6, 7, 8, 9 jeweils um 90° versetzt zur mittleren Taste 5 angeordnet sind (vgl. auch Fig. 4).

Wie aus Fig. 1 ersichtlich ist, umfasst die Multifunktions-Bedienvorrichtung 1 ferner eine Steckachse 11, welche am zweiten Teilelement 3 angeordnet ist. Wie aus Fig. 2 ersichtlich ist, ist die Steckachse 11 mittels eines Bolzenelements 15 am zweiten Teilelement 3 fixiert. Ferner ist im zweiten Teilelement 3 ein Gewicht 14 enthalten, welches als Gegengewicht eine ausgeglichene Gewichtsverteilung in der Multifunktions-Bedienvorrichtung sicherstellt.

Wie ferner aus Fig. 2 ersichtlich ist, die die Platine 12 mit einer Signalübertragungseinrichtung 13 verbunden, welche in diesem Ausführungsbeispiel eine Funkübertragungsstrecke umfasst, um über die Tasten eingegebene Bedienbefehle an eine Steuerung zu übertragen.

Die Multifunktions-Bedienvorrichtung 1 gemäß dem ersten Ausführungsbeispiel kann somit mittels der Steckachse 11 auf unterschiedliche Halterungen gesteckt werden, wodurch für verschiedene Fahrzeuge, wie z.B. ein Kraftfahrzeug und ein Elektrorollstuhl eines behinderten Menschen nur eine einzige Multifunktions-Bedienvorrichtung 1 notwendig ist. Die Steckachse 11 kann dabei beispielsweise über eine Rastverbindung mit dem jeweiligen Fahrzeug verbunden werden, welche jeweils gleich ausgebildete Aufnahmen für die Steckachse 11 aufweisen.

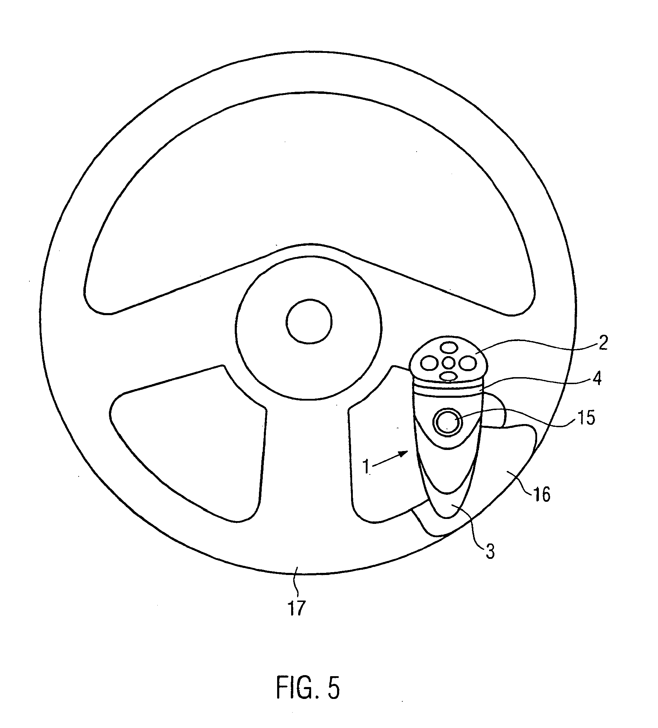

Fig. 5 zeigt eine Multifunktions-Bedienvorrichtung 1 gemäß einem zweiten Ausführungsbeispiel der Erfindung. Gleiche bzw. funktional gleiche Bauteile sind dabei mit den gleichen Bezugszeichen wie im ersten Ausführungsbeispiel bezeichnet.

Die Multifunktions-Bedienvorrichtung des zweiten Ausführungsbeispiels entspricht im Wesentlichen der des ersten Ausführungsbeispiels, wobei die Multifunktions-Bedienvorrichtung 1 des zweiten Ausführungsbeispiels zusätzlich noch eine Halterung 16 und ein Drehgelenk umfasst.

Das Drehgelenk ist zwischen der Halterung 16 und der Steckachse vorgesehen und ermöglicht eine 360°-Drehung des mit der Steckachse verbundenen Bedienbereichs gegenüber der Halterung 16. Die Halterung 16 ist bogenförmig entsprechend der Krümmung eines Lenkrads 17 gekrümmt und auf das Lenkrad aufklipsbar. Die Halterung 16 kann dabei an eine beliebige Stelle am äußeren Umfang des Lenkrads 17 aufgeklipst werden. Dadurch ist die Multifunktions-Bedienvorrichtung 1 des zweiten Ausführungsbeispiels lösbar mit einem Lenkrad verbunden. Das Drehgelenk stellt dabei sicher, dass die Ausrichtung der Multifunktions-Bedienvorrichtung 1 in jeder Lenkradstellung immer für einen Benutzer in einer optimalen und angenehmen Position sein kann. Dabei ermöglicht das Drehgelenk auch, dass ein vollständiger Lenkradeinschlag um 360° oder mehr durchgeführt werden kann, ohne dass es zu funktionalen Beeinträchtigungen bei der Bedienung des Fahrzeugs kommt. Durch die ergonomische Anordnung der Tasten am ersten Teilelement 2 können auch bei Kurvenfahrten oder einer Fahrt durch einen Kreisverkehr entsprechende Bedienfunktionen, wie z.B. ein Blinker oder ein Scheibenwischer, betätigt werden. Ansonsten entspricht dieses Ausführungsbeispiel dem ersten Ausführungsbeispiel, so dass auf die dort gegebene Beschreibung verwiesen werden kann.

### Bezugszeichenliste

- 1: Multifunktions-Bedienvorrichtung
- 2: Erstes Teilelement
- 3: Zweites Teilelement
- 4: Distanzring
- 5 bis 10: Taste
- 11: Steckachse
- 12: Platine
- 13: Signalübertragungseinrichtung
- 14: Gewicht
- 15: Bolzen
- 16: Halterung
- 17: Lenkrad

## Patentansprüche

1. Multifunktions-Bedienvorrichtung zur Bedienung eines Kraftfahrzeugs für behinderte Menschen, umfassend ein erstes Teilelement (2), an welchem wenigstens eine Taste (5, 6, 7, 8, 9, 10) zur Bedienung einer Funktion des Fahrzeugs angeordnet ist, ein zweites Teilelement (3), welches zur Auflage einer Handfläche ausgebildet ist, und einen Distanzring (4), welcher zwischen dem ersten und dem zweiten Teilelement (2, 3) angeordnet ist, wobei der Distanzring (4) austauschbar angeordnet ist, so dass ein Abstand zwischen dem ersten Teilelement (2) und dem zweiten Teilelement (3) durch Verwendung verschiedener Distanzringe mit unterschiedlichen Breiten (B) variabel ist, wobei das zweite Teilelement (3) mittels eines Drehgelenks um 360° drehbar an einem Kranz eines Lenkrads (17) des Fahrzeugs lagerbar ist.

2. Multifunktions-Bedienvorrichtung nach Anspruch 1, **dadurch gekennzeichnet, dass** das zweite Teilelement (3) zur Auflage der Handfläche ergonomisch an die Handfläche angepasst ist.

3. Multifunktions-Bedienvorrichtung nach einem der vorhergehenden Ansprüche, **dadurch gekennzeichnet, dass** am ersten Teilelement (2) wenigstens fünf Tasten angeordnet sind, wobei um eine zentrale Taste (5) vier weitere Tasten (6, 7, 8, 9) um jeweils 90° versetzt angeordnet sind.

4. Multifunktions-Bedienvorrichtung nach einem der vorhergehenden Ansprüche, **gekennzeichnet durch** eine Signalübertragungseinrichtung (13) zur Übertragung eines **durch** eine Betätigung einer Taste (5, 6, 7, 8, 9, 10) erzeugten Befehls zu einer Steuerung.

5. Multifunktions-Bedienvorrichtung nach Anspruch 4, **dadurch gekennzeichnet, dass** die Signalübertragungseinrichtung (13) eine Infrarot-Signalübertragungseinrichtung oder eine Funk-Signalübertragungseinrichtung ist.

6. Multifunktions-Bedienvorrichtung nach einem der vorhergehenden Ansprüche, ferner umfassend eine Halterung, welche zur Befestigung an dem Lenkrad (17) des Kraftfahrzeugs ausgelegt ist.

7. Multifunktions-Bedienvorrichtung nach Anspruch 6, **dadurch gekennzeichnet, dass** die Halterung (16) eine bogenförmige Halbschale umfasst, welche auf das Lenkrad (17) aufklipsbar ist.

8. Multifunktions-Bedienvorrichtung nach einem der vorhergehenden Ansprüche, **gekennzeichnet durch** eine Steckachse (11), welche an einem unteren Bereich des zweiten Teilelements (3) angeordnet ist, um auf ein Halteelement aufsteckbar zu sein.

9. Multifunktions-Bedienvorrichtung nach einem der vorhergehenden Ansprüche, **dadurch gekennzeichnet, dass** das zweite Teilelement (3) aus zwei Halbschalen zusammengesetzt ist.

## Claims

1. A multi-functional operation device for operating a vehicle for handicapped persons, comprising a first partial member (2) having at least one pushbutton (5, 6, 7, 8, 9, 10) arranged thereon for operating a function of the vehicle, a second partial member (3) which is formed for supporting a palm, and a spacer ring (4) arranged between the first and second partial members (2, 3), the spacer ring (4) being arranged replaceably, such that a distance between the first partial member (2) and the second partial member (3) can be varied by using different spacer rings having different widths (B), wherein the second partial member (3) may be supported at a collar of a steering wheel (17) of the vehicle rotatably by 360° by means of a pivot joint.

2. The multi-functional operation device of claim 1, **characterized in that** the second partial member (3) for supporting the palm is adapted ergonomically to the palm.

3. The multi-functional operation device of one of the preceding claims, **characterized in that** at least five pushbuttons are arranged at the first partial member (2), wherein five additional pushbuttons (6, 7, 8, 9) are arranged about a center pushbutton (5) offset by respectively 90°.

4. The multi-functional operation device of one of the preceding claims, **characterized by** a signal transmission unit (13) for transmitting a command generated by operating a pushbutton (5, 6, 7, 8, 9, 10) to a controller.

5. The multi-functional operation device of claim 4, **characterized in that** the signal transmission unit (13) is an infrared signal transmission unit or a radio signal transmission unit.

6. The multi-functional operation device of one of the preceding claims, further comprising a bracket which is adapted to be fixed at the steering wheel (17) of the vehicle.

7. The multi-functional operation device of claim 6, **characterized in that** the bracket (16) comprises an arc-shaped half-shell which can be clipped onto the steering wheel (17).

8. The multi-functional operation device of one of the preceding claims, **characterized by** a half-shaft (11) which is arranged at a lower portion of the second partial member (3) to be fit onto a retaining member.

9. The multi-functional operation device of one of the preceding claims, **characterized in that** the second partial member (3) is composed of two half-shells.

## Revendications

1. Appareil de commande multifonctionnel pour la commande d'un véhicule automobile par des personnes handicapées, comprenant un premier élément partiel (2) sur lequel est prévue au moins une touche (5, 6, 7, 8, 9, 10) pour la commande d'une fonction du véhicule, un deuxième élément partiel (3) prévu pour l'application de la paume d'une main, et une bague d'écartement (4) disposée entre le premier et le deuxième éléments partiels (2, 3), ladite bague d'écartement (4) étant disposée de manière à pouvoir être changée, si bien qu'un espacement est rendu variable entre le premier élément partiel (2) et le deuxième élément partiel (3) par utilisation de différentes bagues d'écartement de largeur (B) différenciées, le deuxième élément partiel (3) pouvant être monté de manière à pouvoir tourner sur 360° au moyen d'une articulation rotative sur une couronne d'un volant (17) du véhicule.

2. Appareil de commande multifonctionnel selon la revendication 1, **caractérisé en ce que** le deuxième élément partiel (3) est ergonomiquement ajusté à la paume de la main pour permettre l'application de ladite paume de main.

3. Appareil de commande multifonctionnel selon l'une des revendications précédentes, **caractérisé en ce qu'**au moins cinq touches sont disposées sur le premier élément partiel (2), quatre touches (6, 7, 8, 9) étant disposées décalées chacune de 90° autour d'une touche centrale (5).

4. Appareil de commande multifonctionnel selon l'une des revendications précédentes, **caractérisé par** un dispositif de transmission de signaux (13), pour la transmission à une commande d'une instruction délivrée par activation d'une touche (5, 6, 7, 8, 9, 10).

5. Appareil de commande multifonctionnel selon la revendication 4, **caractérisé en ce que** le dispositif de transmission de signaux (13) est un dispositif de transmission de signaux par infrarouge ou un dispositif de transmission de signaux par radio.

6. Appareil de commande multifonctionnel selon l'une des revendications précédentes, comprenant en outre un support prévu pour la fixation sur le volant (17) du véhicule automobile.

7. Appareil de commande multifonctionnel selon la revendication 6, **caractérisé en ce que** le support (16) comprend une demi-coque cintrée clipsable sur le volant (17).

8. Appareil de commande multifonctionnel selon l'une des revendications précédentes, **caractérisé par** un axe enfichable (11) disposé dans une zone inférieure du deuxième élément partiel (3), pour pouvoir être fiché sur un élément de maintien.

9. Appareil de commande multifonctionnel selon l'une des revendications précédentes, **caractérisé en ce que** le deuxième élément partiel (3) est composé de deux demi-coques.
